# EUROPEAN PATENT APPLICATION

(11) **EP 4 836 051 A1**
(43) Date of publication of application: **04.11.2026**
(21) Application number: 24914534.3
(22) Date of filing: 02.01.2024
(51) Int. Cl.: H01M 10/0525, H01M 50/204

(54) **BATTERY CELL, BATTERY AND ELECTRICAL APPARATUS**

(71) Applicant: Contemporary Amperex Technology Co., Limited, Ningde, Fujian 352100 (CN)
(72) Inventor: LANG, Yaqiang, Ningde, Fujian 352100 (CN); LIN, Chenhui, Ningde, Fujian 352100 (CN); HE, Jianfu, Ningde, Fujian 352100 (CN); YE, Yonghuang, Ningde, Fujian 352100 (CN)
(74) Representative: Gong, Jinping
(86) International application number: PCT/CN2024/070188
(87) International publication number: WO 2025/145297

(57) **Abstract**

A battery cell (100), a battery (1000), and an electric apparatus (2000) are provided. The battery cell (100) includes: a housing (10); an electrode assembly (20), provided in the housing (10), the electrode assembly (20) including an electrode plate (21) and a separator (22), the electrode plate (21) and the separator (22) being stacked and/or wound to form the electrode assembly (20); and a buffer member (30), provided in the housing (10), the buffer member (30) being provided on at least part of a surface of the electrode assembly (20) and/or inside the electrode assembly (20), where under the same pressure, a compression ratio of the buffer member (30) is greater than a compression ratio of the separator (22).

## Description

### TECHNICAL FIELD

The present application relates to the field of batteries, and in particular, to a battery cell, a battery, and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor related to the development of the electric vehicles.

During the charging and discharging process of a battery, the electrode assembly swells, and the swelling force acting on adjacent electrode assemblies or the housing can easily cause uneven stress, affecting the reliability and service life of the battery.

### SUMMARY

In view of the above problems, the present application provides a battery cell, a battery, and an electric apparatus, which can alleviate the problem that uneven stress during use of a battery affects the service life of the battery cell.

According to a first aspect, the present application provides a battery cell including: a housing; an electrode assembly, provided in the housing, the electrode assembly including an electrode plate and a separator, the electrode plate and the separator being stacked and/or wound to form the electrode assembly; and a buffer member, provided in the housing, the buffer member being provided on at least part of a surface of the electrode assembly and/or inside the electrode assembly, where under the same pressure, a compression rate of the buffer member is greater than a compression rate of the separator.

In the technical solution of the embodiments of the present application, by providing a buffer member having a compression rate greater than that of the separator in the housing, the buffer member is more easily compressed and deformed than the separator. During charging and discharging of the battery cell, the buffer member can be compressed and deformed with the swelling of the electrode assembly to buffer the force exerted by the swelling of the electrode assembly on adjacent structures, alleviating the problem of damage resulting from stress concentration caused by internal compression within the battery cell, and prolonging the service life of the battery cell. In addition, the compression of the buffer member can provide a certain space for the swelling of the electrode assembly, thereby reducing the internal pressure of the battery cell during charging and discharging and improving the reliability of the battery cell.

In some embodiments, a ratio of the compression rate of the buffer member to that of the separator at 1 MPa is L1/L2, where 1 ≤ L1/L2 ≤ 5, preferably 2 ≤ L1/L2 ≤ 3.5. In the above technical solution, the buffer member can both space the separator apart from adjacent structures and effectively deform when the electrode assembly swells, thereby achieving a buffering effect and reducing the probability of stress concentration during swelling of the electrode assembly. In addition, the buffer member can provide effective support, reducing the probability of wrinkling and deformation of the electrode plate and prolonging the service life and reliability of the battery cell.

In some embodiments, the compression rate of the buffer member at 1 MPa is L1, where L1 > 50%, preferably L1 > 60%. In the above technical solution, the buffer member can be compressed and deformed with the swelling of the electrode assembly, absorbing the swelling of the electrode assembly and reducing the probability of stress concentration.

In some embodiments, along a stacking direction of the buffer member and the separator, an area of the buffer member projected onto the housing is S1, and an area of the separator projected onto the housing is S2, S1 and S2 satisfying 0.05 ≤ S1/S2 ≤ 0.95, preferably 0.6 ≤ S1/S2 ≤ 0.9. In the above technical solution, the buffer member can effectively space the separator apart from adjacent structures, to a certain extent preventing an uncovered portion of the separator from being pressed against the adjacent structures. The buffer member can buffer the force acting on adjacent structures, reducing the probability of stress concentration and prolonging the service life and reliability of the battery cell. In addition, this facilitates installation of the separator and to a certain extent prevents the separator occupying excessive venting space, further prolonging the service life and reliability of the battery cell.

In some embodiments, the buffer member and the separator are made of the same material, a ratio of porosity of the buffer member to porosity of the separator being ρ1/ρ2, where 1.05 ≤ ρ1/ρ2 ≤ 4, preferably 2 ≤ ρ1/ρ2 ≤ 3.5. In the above technical solution, under the same pressure, the compression rate of the buffer member is greater than the compression rate of the separator, the buffer member can deform when the electrode assembly swells, achieving a buffering effect and reducing the probability of stress concentration during swelling of the electrode assembly. In addition, the buffer member can provide effective support, reducing the probability of wrinkling and deformation of the electrode plate and prolonging the service life and reliability of the battery cell.

In some embodiments, a thickness ratio of the buffer member to the separator is H1/H2, where 50 ≤ H1/H2 ≤ 700. In the above technical solution, excessive reduction in the volumetric energy density of the battery cell can be prevented, and the probability of stress concentration during swelling of the electrode assembly can be reduced, prolonging the service life and reliability of the battery cell.

In some embodiments, the buffer member has a buffer cavity. In the above technical solution, by providing the buffer cavity, an effective area of the buffer member can be reduced, improving the compression rate of the buffer member while ensuring that the buffer member has a certain deformation resistance, so that during cyclic charging and discharging of the battery cell, the buffer member can alleviate the swelling force exerted by the electrode assembly through compressive deformation. Since a surface of the buffer member has an opening of the buffer cavity, the buffer cavity can accommodate gas generated by the electrode assembly, thereby reducing the internal pressure of the battery cell.

In some embodiments, the buffer member has a pressure-bearing surface facing or facing away from the separator, and a portion of the pressure-bearing surface is recessed to form the buffer cavity. In the above technical solution, the buffer member can support the electrode assembly or the electrode plate of the electrode assembly, while reducing the effective area of the buffer member and improving the compressibility of the buffer member while ensuring that the buffer member has a certain deformation resistance.

In some embodiments, the buffer member includes a first pressure-bearing surface and a second pressure-bearing surface disposed opposite each other, and the buffer cavity runs through the first pressure-bearing surface and the second pressure-bearing surface. In the above technical solution, by allowing the buffer cavity to run through the two pressure-bearing surfaces of the buffer member, the area of the buffer member can be effectively reduced, improving the compression rate of the buffer member. During charging and discharging of the electrode assembly, the buffer member can be effectively compressed to alleviate the swelling force exerted by the electrode assembly, and the external dimension of the buffer member can be increased to a certain extent, so that the buffer member provides better overall support for the electrode assembly, reducing deformation of the electrode plate, thereby improving wrinkling of the electrode plate caused by swelling of the electrode assembly and alleviating lithium or sodium precipitation issues during cycling of the electrode assembly. The buffer cavity can also accommodate gas generated by the electrode assembly, thereby reducing the internal pressure of the battery cell, effectively improving the cycling performance of the battery cell, which is further conducive to prolonging the service life of the battery cell.

In some embodiments, the electrode assembly includes a flat region and a bending region connected to an end of the flat region, and the buffer member is arranged opposite to at least one of the flat region and the bending region. In the above technical solution, arranging the buffer member opposite the flat region enables the buffer member to buffer the region of the electrode assembly corresponding to the flat region; and arranging the buffer member opposite a bending portion makes the region of the buffer member facing the bending portion generally arc-shaped, so that the buffer member can buffer the swelling force of the bending portion, mitigating the risk of bridge breakage and lithium precipitation in the electrode assembly.

In some embodiments, along a stacking direction of the buffer member and the electrode assembly, the area of the buffer member projected onto the housing is S1, the electrode assembly includes a flat region and a bending region connected to an end of the flat region, and an area of the positive electrode active substance region of the flat region projected onto the housing is S3, where 0.3 ≤ S1/S3 ≤ 1.1, preferably 0.75 ≤ S1/S3 ≤ 0.85. In the above technical solution, the arrangement of the buffer member can reduce the probability of stress concentration during swelling of the electrode assembly, while facilitating installation of the buffer member without occupying excessive space, improving the reliability of the battery cell.

In some embodiments, the electrode assembly includes a plurality of electrode plates arranged in a stacked manner, where along a stacking direction of the plurality of electrode plates, the area of the buffer member projected onto the housing is S1, and an area of the positive electrode active substance region of the electrode assembly projected onto the housing is S4, where 0.3 ≤ S1/S4 ≤ 1.1, preferably 0.75 ≤ S1/S4 ≤ 0.85. In the above technical solution, the arrangement of the buffer member can reduce the probability of stress concentration during swelling of the electrode assembly, while facilitating installation of the buffer member without occupying excessive space, improving the reliability of the battery cell.

In some embodiments, the buffer member is provided between the housing and the electrode assembly. In the above technical solution, and the buffer member can both support and buffer the electrode assembly and space the electrode assembly apart from the housing, making it less likely for the swelled electrode assembly to press against the housing.

In some embodiments, the battery cell includes a plurality of electrode assemblies, and the buffer member is provided between two adjacent electrode assemblies. In the above technical solution, the buffer member is provided between two adjacent electrode assemblies, the buffer member can both support and buffer the electrode assemblies and space apart the adjacent electrode assemblies, making them less likely to press against each other after swelling of the electrode assemblies.

In some embodiments, the buffer member is provided between the electrode plate and the separator. In the above technical solution, by providing the buffer member between the electrode plate and the separator, the buffer member can effectively absorb swelling of the electrode plate, thereby reducing stress during swelling of the electrode assembly.

In some embodiments, the buffer member is a porous material member. In the above technical solution, by using such a porous foamed material member, the compressibility of the buffer member can be improved while reducing manufacturing costs.

In some embodiments, the material of the buffer member includes at least one of polyvinyl chloride, ethylene-vinyl acetate, polyethylene, polypropylene, polyurethane, polymethacrylimide, polyimide, polystyrene, and modified silicone rubber. In the above technical solution, by controlling the type of main material of the buffer member, the material has good resistance to electrolyte corrosion, compressibility, and resilience, ensuring its reliability throughout the full life cycle of the battery cell.

According to a second aspect, the present application provides a battery, including the battery cell in the above embodiments.

According to a third aspect, the present application provides an electric apparatus, including the battery in the above embodiments, the battery being configured to provide electrical energy.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the accompanying drawings:
FIG. 1 is a schematic diagram of an electric apparatus in the related art;
FIG. 2 is a schematic diagram of a battery in the related art;
FIG. 3 is a schematic diagram of a battery cell in the related art;
FIG. 4 is a partial schematic diagram of a battery cell according to some embodiments of the present application;
FIG. 5 is a partial schematic diagram of a battery cell according to other embodiments of the present application;
FIG. 6 is a partial schematic diagram of a battery cell according to still other embodiments of the present application;
FIG. 7 is a schematic diagram of a buffer member according to some embodiments of the present application;
FIG. 8 is a schematic diagram of a buffer member according to other embodiments of the present application;
FIG. 9 is a schematic diagram of a buffer member according to still other embodiments of the present application;
FIG. 10 is a schematic diagram of a buffer member according to yet other embodiments of the present application;
FIG. 11 is a cross-sectional view of a battery cell according to some embodiments of the present application;
FIG. 12 is a cross-sectional view of a battery cell according to other embodiments of the present application; and
FIG. 13 is a cross-sectional view of a battery cell according to still other embodiments of the present application.

Reference signs:
battery 1000, electric apparatus 2000,
battery cell 100,
housing 10, shell 11, end cap 12,
electrode assembly 20, flat region 201, bending region 202, electrode plate 21, separator 22,
buffer member 30, pressure-bearing surface 31, first pressure-bearing surface 311, second pressure-bearing surface 312, and buffer cavity 32.

### DETAILED DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification are intended to merely describe the specific embodiments rather than to limit the present application. The terms "include", "comprise", and "have" and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

Reference to "embodiment" in the present application means that specific features, structures, or characteristics described with reference to the embodiment may be incorporated in at least one embodiment of the present application. The word "embodiment" appearing in various places in the specification does not necessarily refer to the same embodiment or an independent or alternative embodiment that is exclusive of other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "a plurality of" means more than two (inclusive).

In the present application, a battery refers to a single physical module that includes one or more battery cells for providing a higher voltage and capacity. For example, the battery mentioned in the present application may include a battery module, a battery pack, or the like. Some batteries may include a box configured to enclose one or more battery cells or a plurality of battery modules. The box can prevent liquids or other foreign matter from affecting charging or discharging of the battery cells. Certainly, some batteries may not include the above box and are directly provided in a battery installation compartment of an electric apparatus.

In the present application, a battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be cylindrical, flat, rectangular, or of other shapes, which is not limited in the embodiments of the present application either. Battery cells are typically divided into three types by packaging method: cylindrical battery cell, prismatic battery cell, and pouch battery cell. This is not limited in the embodiments of the present application either.

For example, a battery cell may include a housing, an electrode assembly, and an electrolyte, the housing being configured to accommodate the electrode assembly and the electrolyte. The electrode assembly consists of a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The part of the positive electrode current collector uncoated with the positive electrode active substance layer protrudes out of the part of the positive electrode current collector coated with the positive electrode active substance layer and serves as a positive electrode tab. A lithium-ion battery is used as an example, in which a positive electrode current collector may be made of aluminum, and a positive electrode active substance may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of the negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be a wound structure or a laminated structure. However, the embodiments of the present application are not limited thereto.

The battery cell may be provided with poles or the like connected to the tabs, using as electrical connection portions of the battery cell. Moreover, the battery cell may have a pressure relief portion, and the pressure relief portion is configured to release internal substances (such as gas, liquid, particles, or the like) of the battery cell when the internal pressure of the battery cell is excessive (for example, thermal runaway), to reduce the internal pressure of the battery cell and avoid hazardous incidents such as explosion and fire of the battery cell due to rapid pressurization inside the battery cell. For example, the pressure relief portion may be an explosion-proof valve, an explosion-proof sheet, or the like.

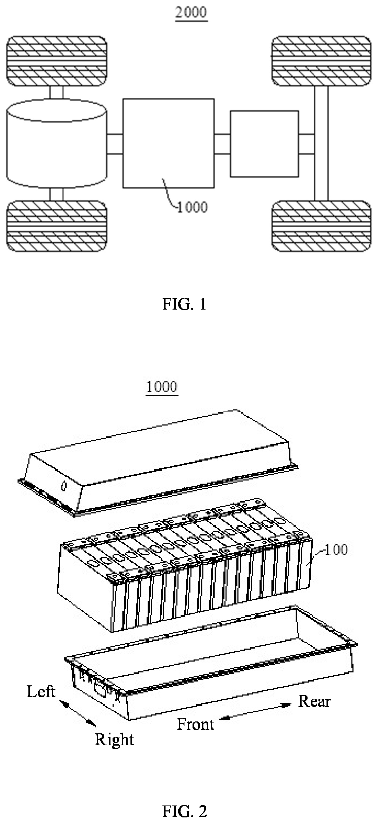

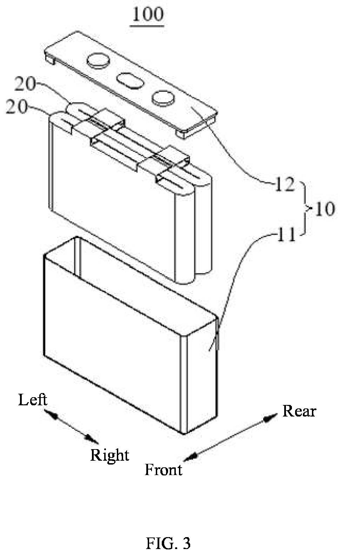

For example, as shown in FIGs. 1 and 2, in some electric apparatuses 2000, a battery 1000 is configured to supply power. The battery 1000 includes a box and battery cells 100, the box including an upper shell and a lower shell. As shown in FIG. 3, the battery cell 100 includes an electrode assembly 20 and a housing 10, the housing 10 including a shell 11 and an end cap 12. In the conventional technology, the electrode assembly 20 includes an electrode plate 21 and a separator 22, the separator 22 having a certain thickness and relatively low porosity. During the charging and discharging process of the battery cell 100, the electrode assembly 20 swells, the deformation amount of the separator 22 is small, and the separator 22 pressing against adjacent structures can cause problems such as stress concentration and uneven stress, affecting the reliability and service life of the battery cell 100.

In view of this, the present application proposes a battery cell 100 including: a housing 10, an electrode assembly 20, and a buffer member 30. The electrode assembly 20 is provided in the housing 10, the electrode assembly 20 includes an electrode plate 21 and a separator 22, and the electrode plate 21 and the separator 22 are stacked and/or wound to form the electrode assembly 20. The buffer member 30 is provided in the housing 10, and the buffer member 30 is provided on at least part of a surface of the electrode assembly 20 and/or inside the electrode assembly 20, where under the same pressure, a compression rate of the buffer member 30 is greater than a compression rate of the separator 22.

In the battery cell 100 of such a structure, by providing a buffer member 30 having a compression rate greater than that of the separator 22 in the housing 10, the buffer member 30 is more easily compressed and deformed than the separator 22. During charging and discharging of the battery cell 100, the buffer member 30 can be compressed and deformed with the swelling of the electrode assembly 20 to buffer the force exerted by the swelling of the electrode assembly 20 on adjacent structures, alleviating the problem of damage resulting from stress concentration caused by internal compression within the battery cell 100, and prolonging the service life of the battery cell 100. In addition, the compression of the buffer member 30 can provide a certain space for the swelling of the electrode assembly 20, thereby reducing the internal pressure of the battery cell 100 during charging and discharging and improving the reliability of the battery cell 100.

The battery 1000 disclosed in the embodiments of the present application may be used in, but not limited to, electric apparatuses 2000 such as vehicles, ships, or aircraft, and the power system of the electric apparatus 2000 composed of the battery 1000 disclosed in the present application may be used to ensure the safety and reliability of the electric apparatus 2000.

For example, the electric apparatus 2000 disclosed in the embodiments of the present application may be, but is not limited to, a vehicle, a mobile phone, a tablet, a notebook computer, a ship, a spacecraft, an electric toy, and an electric tool. The vehicle may be a fossil fuel vehicle, a natural-gas vehicle, a new energy vehicle, or a rail vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The following describes a battery 1000 according to the embodiment of the present application with reference to the accompanying drawings.

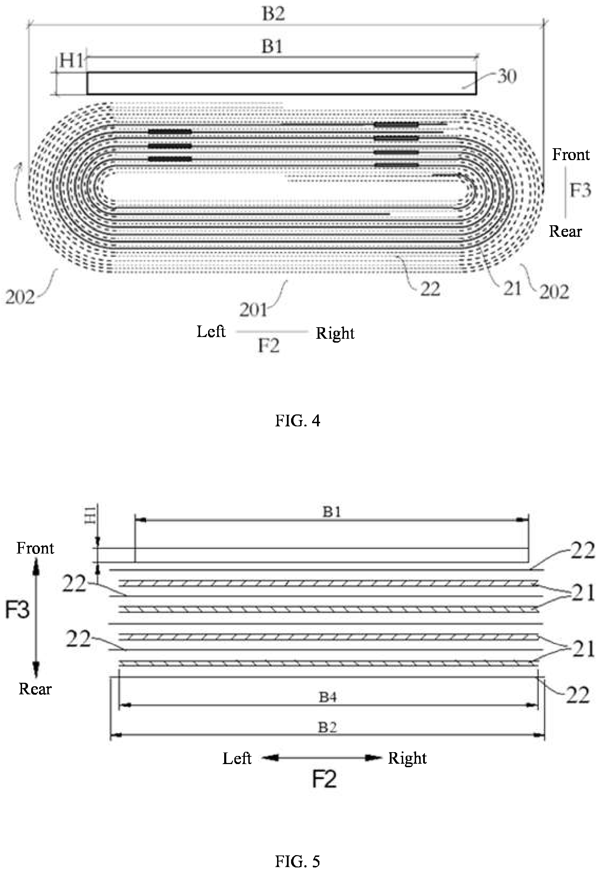

As shown in FIGs. 3 to 6, FIG. 3 is a schematic diagram of a battery cell; and FIGs. 4 to 6 are partial schematic diagrams of a battery cell according to some embodiments of the present application. The battery cell 100 according to the embodiments of the present application includes: a housing 10, an electrode assembly 20, and a buffer member 30. The electrode assembly 20 is provided in the housing 10, the electrode assembly 20 includes an electrode plate 21 and a separator 22, and the electrode plate 21 and the separator 22 are stacked and/or wound to form the electrode assembly 20. The buffer member 30 is provided in the housing 10, and the buffer member 30 is provided on at least part of a surface of the electrode assembly 20 and/or inside the electrode assembly 20, where under the same pressure, the compression rate of the buffer member 30 is greater than the compression rate of the separator 22.

The housing 10 refers to the outermost structure of the battery cell 100, and the housing 10 accommodates the electrode assembly 20, electrolyte, or the like.

The electrode assembly 20 includes an electrode plate 21 and a separator 22. The electrode plate 21 includes a positive electrode plate 21 and a negative electrode plate 21, where the positive electrode plate 21 includes a positive electrode current collector and a positive electrode active substance layer, and the negative electrode plate 21 may include a negative electrode current collector or the negative electrode plate 21 includes a negative electrode current collector and a negative electrode active substance layer.

As shown in FIG. 4, in some embodiments, the electrode assembly 20 is a wound structure. The electrode plate 21 and the separator 22 may be wound to form the electrode assembly 20. The flat region 201 refers to the portion of the electrode plate 21 extending along a plane after winding; and the bending region 202 refers to the portion of the electrode plate 21 extending along an arc surface after winding. For example, as shown in FIG. 4, the portion between the front side surface and the rear side surface of the electrode assembly 20 is formed as the flat region 201.

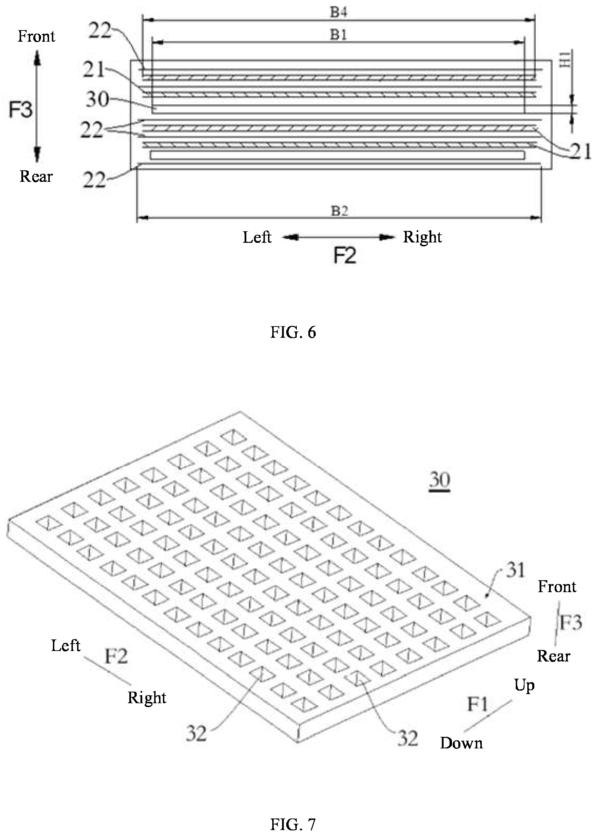

As shown in FIGs. 5 and 6, in some embodiments, the electrode assembly 20 is a laminated structure, the electrode plate 21 and the separator 22 being stacked to form the electrode assembly 20, where a plurality of separators 22 may be provided, and are respectively provided between any adjacent positive electrode plate 21 or negative electrode plate 21. Alternatively, the separator 22 may be continuously provided and arranged between any adjacent positive electrode plate 21 or negative electrode plate 21 by folding.

The buffer member 30 is provided in the housing 10, and the buffer member may be provided on the surface of the electrode assembly 20. As shown in FIGs. 4 and 5, the buffer member 30 is located on the front side surface of the electrode assembly 20, the buffer member 30 can both support and buffer the electrode assembly 20 and space the electrode assembly 20 apart from the housing 10, making it less likely for the swelled electrode assembly 20 to press against the housing 10. Alternatively, as shown in FIG. 6, the buffer member 30 is located inside the electrode assembly 20, the electrode assembly 20 includes the electrode plate 21 and the separator 22, the buffer member 30 is located between the electrode plate 21 and the separator 22, and the buffer member 30 can both support and buffer the electrode plate 21 and space adjacent electrode plate 21 apart from the separator 22, making it less likely for the swelled electrode plate 21 to press against the separator 22.

The buffer member 30 is compressible, that is, it can be compressed and deformed when subjected to external force to reduce occupied space; and when the external force is removed, it can at least partially recover deformation to provide stable support.

Under the same pressure, the compression rate of the buffer member 30 is greater than the compression rate of the separator 22, so that during charging and discharging of the battery cell 100, the electrode plate 21 of the electrode assembly 20 swells and deforms, the buffer member 30 can be compressed and deformed, and the compression amount of the buffer member 30 is greater than the compression rate of the separator 22.

In the technical solution of the embodiments of the present application, by providing a buffer member 30 having a compression rate greater than that of the separator 22 in the housing 10, the buffer member 30 is more easily compressed and deformed than the separator 22. During charging and discharging of the battery cell 100, the buffer member 30 can be compressed and deformed with the swelling of the electrode assembly 20 to buffer the force exerted by the swelling of the electrode assembly 20 on adjacent structures, alleviating the problem of damage resulting from stress concentration caused by internal compression within the battery cell 100, and prolonging the service life of the battery cell 100. In addition, the compression of the buffer member 30 can provide a certain space for the swelling of the electrode assembly 20, thereby reducing the internal pressure of the battery cell 100 during charging and discharging and improving the reliability of the battery cell 100.

In some embodiments, the ratio of the compression rate of the buffer member 30 to that of the separator 22 at 1 MPa is L1/L2, where 1 ≤ L1/L2 ≤ 5, preferably 2 ≤ L1/L2 ≤ 3.5.

At 1 MPa, if the ratio of the compression rate of the buffer member 30 to that of the separator 22 is too small, the compression rates of the buffer member 30 and the separator 22 are close, the buffering effect of the buffer member 30 is not obvious, and stress concentration is likely to occur during swelling of the electrode assembly 20. If the ratio of the compression rate of the buffer member 30 to that of the separator 22 is too large, the compression rate of the buffer member 30 is too large, making it difficult to provide effective support, and the electrode plate 21 is prone to wrinkling and deformation.

In view of this, L1/L2 can be limited to between 1 and 5, and L1/L2 may be any one of 1, 2, 3, 4, or 5, or a range defined by any two of these values.

This allows the buffer member 30 to both space the separator 22 apart from adjacent structures and effectively deform when the electrode assembly 20 swells, thereby achieving a buffering effect and reducing the probability of stress concentration during swelling of the electrode assembly 20. In addition, the buffer member 30 can provide effective support, reducing the probability of wrinkling and deformation of the electrode plate 21 and prolonging the service life and reliability of the battery cell 100.

In some embodiments, 2 ≤ L1/L3 ≤ 3.5, and L1/L3 may be any one of 2, 2.1, 2.2, 2.3, 2.4, 2.5, 2.6, 2.7, 2.8, 2.9, 3, 3.1, 3.2, 3.3, 3.4, or 3.5, or a range defined by any two of these values.

This allows the buffer member 30 to both space the separator 22 apart from adjacent structures and further deform when the electrode assembly 20 swells, achieving a buffering effect and reducing the probability of stress concentration during swelling of the electrode assembly 20. In addition, the buffer member 30 can provide effective support, reducing the probability of wrinkling and deformation and prolonging the service life and reliability of the battery cell 100.

In some embodiments, the compression rate of the buffer member 30 at 1 MPa is L1, where L1 > 50%, preferably L1 > 60%.

When the compression rate of the buffer member 30 is too small, the compressible amount of the buffer member 30 is small, making it difficult to absorb deformation of the electrode assembly 20, and easily causing the swelling force of the electrode assembly 20 to act on adjacent structures, leading to stress concentration. In view of this, the compression rate L1 of the buffer member 30 at 1 MPa is set to be greater than or equal to 50%, L1 may be 50%, 60%, 70%, 80%, or 90%, thereby allowing the buffer member 30 to be compressed and deformed with the swelling of the electrode assembly 20, absorbing the swelling of the electrode assembly 20 and reducing the probability of stress concentration.

In some examples, L1 ≥ 60%, L1 may be 60%, 65%, 70%, 80%, or 90%, more preferably L1 ≥ 80%, L1 may be 80%, 85%, 90%, or 95%. This allows the buffer member 30 to be compressed and deformed with the swelling of the electrode assembly 20 to absorb as much as possible the swelling of the electrode assembly 20 and reduce the probability of stress concentration.

The compression rate test method for the buffer member 30 is as follows:
(1) A sample having a dimension of 46*50 mm is taken for testing, 2 groups of parallel sample tests are performed each time.
(2) It is confirmed that only an empty pad is in the sample chamber without any sample. The protective door is closed, the MISS software is opened, the required channel to be tested is selected in the channel information; and origin reset, pressure reset, thickness reset buttons are clicked respectively.
(3) The sample is placed in the sample chamber of the in-situ swelling analyzer, aligning the sample center with the pad center corresponding to two laser centers. The protective door is closed, the explosion-proof buckle is secured, and the upper and lower pads are aligned. The sample length and width values are input in the MISS system, and start experiment is clicked to begin the test.
(4) A compression test is performed at a rate of 0.5 mm/min, the thickness changes in real time are recorded until the pressure recorded value reaches 1 MPa, and compressible amount changes are obtained, thereby obtaining the compression rate of the sample.

As shown in FIGs. 4 to 6 and 7 to 10, FIGs. 7 to 10 are schematic diagrams of buffer members according to some embodiments of the present application. In some embodiments, along a stacking direction of the buffer member 30 and the separator 22, an area of the buffer member 30 projected onto the housing 10 is S1, and an area of the separator 22 projected onto the housing 10 is S2, S1 and S2 satisfying 0.05 ≤ S1/S2 ≤ 0.95, preferably 0.6 ≤ S1/S2 ≤ 0.9.

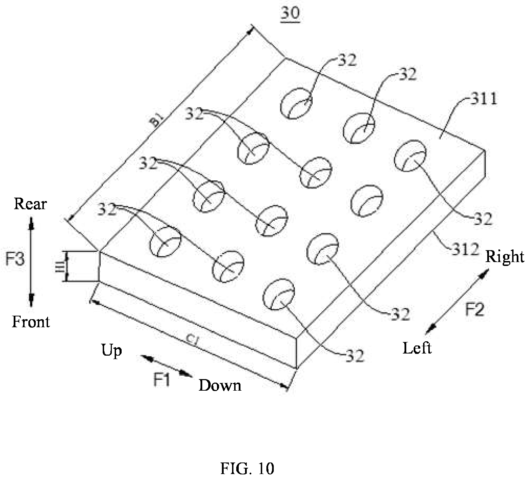

As shown in FIGs. 4 to 10, the buffer member 30 and the separator 22 are stacked along a third direction F3 (the front-rear direction as shown in FIG. 4), the buffer member 30 can cover at least a portion of the separator 22, where the buffer member 30 can be smaller than the dimension of the separator 22, that is, the portion of the separator 22 covered by the buffer member 30 is the whole of the buffer member 30. The dimension of the buffer member 30 in a second direction F2 (the left-right direction as shown in FIG. 10) is B1, as shown in FIG. 10, the dimension of the buffer member 30 in a first direction F1 (the up-down direction as shown in FIG. 10) is C1, the area S1 of the buffer member 30 satisfies S1=B1*Cl. The dimension of the separator 22 in the second direction F2 is B2, the dimension of the separator 22 in the first direction is C2, and the area S2 of the separator 22 satisfies S2=B2*C2.

When S1/S2 is too small, the portion of the separator 22 covered by the buffer member 30 is too small, and during swelling of the electrode assembly 20, the separator 22 is still likely to press against adjacent structures, causing stress concentration. When S1/S2 is too large, installation of the buffer member 30 in the battery cell 100 is inconvenient, and the buffer member 30 occupying too much space easily affects the venting space inside the battery cell 100.

In view of this, S1/S2 can be limited to between 0.05 and 0.95, and S1/S2 may be any one of 0.05, 0.1, 0.2, 0.3, 0.4, 0.5, 0.6, 0.7, 0.8, 0.9, or 0.95, or a range defined by any two of these values.

By limiting S1/S2, the buffer member 30 can effectively space the separator 22 apart from adjacent structures, to a certain extent preventing an uncovered portion of the separator 22 from being pressed against adjacent structures. The buffer member 30 can buffer the force acting on adjacent structures, reducing the probability of stress concentration and prolonging the service life and reliability of the battery cell 100. In addition, this facilitates installation of the separator 22 and to a certain extent prevents the separator 22 occupying excessive venting space, further prolonging the service life and reliability of the battery cell 100.

In some examples, the dimension of the separator 22 is larger than the dimension of the electrode plate 21. During swelling of the electrode assembly 20, the edge of the separator 22 is located on an outer periphery of the electrode plate 21, with smaller deformation at the edge of the separator 22. Thus, the buffer member 30 can cover the middle portion of the separator 22, and the edge of the buffer member 30 is located inside the edge of the separator 22, so as to reduce the dimension of the buffer member 30, lower costs, and to a certain extent avoid excessive occupation of venting space by the separator 22, prolonging the service life and reliability of the battery cell 100.

In some examples, 0.6 ≤ S1/S2 ≤ 0.9, where S1/S2 is limited to between 0.6 and 0.9, and S1/S2 may be any one of 0.6, 0.65, 0.7, 0.75, 0.8, 0.85, or 0.9, or a range defined by any two of these values.

Thus, the buffer member 30 can effectively space the separator 22 apart from adjacent structures, to a certain extent preventing an uncovered portion of the separator 22 from being pressed against adjacent structures. The buffer member 30 can buffer the force acting on adjacent structures, reducing the probability of stress concentration and prolonging the service life and reliability of the battery cell 100. In addition, this facilitates installation of the separator 22 and to a certain extent prevents the separator 22 occupying excessive venting space, further prolonging the service life and reliability of the battery cell 100.

In some embodiments, the buffer member 30 and the separator 22 are made of the same material, a ratio of porosity of the buffer member 30 to porosity of the separator 22 being ρ1/ρ2, where 1.05 ≤ ρ1/ρ2 ≤ 4, preferably 2 ≤ ρ1/ρ2 ≤ 3.5.

The buffer member 30 can be made of the same material as the separator 22, thereby providing the buffer member 30 with good chemical stability and mechanical stability. When the buffer member 30 is provided inside the electrode assembly 20, the buffer member 30 can transmit ions and space the positive electrode apart from the negative electrode, allowing the battery cell 100 to charge and discharge normally.

When ρ1/ρ2 is too small, the porosities of the buffer member 30 and the separator 22 are close, the difference in compression rates between the buffer member 30 and the separator 22 is small, the buffering effect of the buffer member 30 is not obvious, and stress concentration is likely to occur. If the ratio of the porosities of the buffer member 30 to the separator 22 is too large, the compression rate of the buffer member 30 is likely too large, making it difficult to provide effective support, and the electrode plate 21 is prone to wrinkling and deformation.

In view of this, ρ1/ρ2 can be limited to between 1.05 and 4, and ρ1/ρ2 may be any one of 1.05, 1.5, 2, 2.5, 3, 3.5, or 4, or a range defined by any two of these values.

This allows the compression rate of the buffer member 30 under the same pressure to be greater than the compression rate of the separator 22, the buffer member 30 can deform when the electrode assembly 20 swells, achieving a buffering effect and reducing the probability of stress concentration during swelling of the electrode assembly 20. In addition, the buffer member 30 can provide effective support, reducing the probability of wrinkling and deformation of the electrode plate 21 and prolonging the service life and reliability of the battery cell 100.

In some examples, 2 ≤ ρ1/ρ2 ≤ 3.5, and ρ1/ρ2 may be any one of 2, 2.1, 2.2, 2.3, 2.4, 2.5, 2.6, 2.7, 2.8, 2.9, 3, 3.1, 3.2, 3.3, 3.4, or 3.5, or a range defined by any two of these values.

Thus, under the same pressure, the compression rate of the buffer member 30 is greater than the compression rate of the separator 22, the buffer member 30 can deform when the electrode assembly 20 swells, achieving a buffering effect and reducing the probability of stress concentration during swelling of the electrode assembly 20. In addition, the buffer member 30 can provide effective support, reducing the probability of wrinkling and deformation of the electrode plate 21 and prolonging the service life and reliability of the battery cell 100.

In some specific examples, the porosity ρ1 of the buffer member 30 satisfies 0.5 ≤ ρ1 ≤ 0.85, thereby providing the buffer member 30 with a better compression rate, allowing the buffer member 30 to deform when the electrode assembly 20 swells and achieve an effective buffering effect.

As shown in FIGs. 4 to 6, in some embodiments, a thickness ratio of the buffer member 30 to the separator 22 is H1/H2, where 50 ≤ H1/H2 ≤ 700.

As shown in FIGs. 4 to 6, in some examples, the thickness of the buffer member 30 in the third direction F3 is H1, and the thickness of the buffer member 30 herein is the thickness of the buffer member 30 in the free state, the thickness of each separator 22 in the third direction F3 is H2. If H1/H2 is too large, H1 is too large, the thickness of the buffer member 30 is too large, the space occupied by the buffer member 30 is too much, the corresponding space occupied by the electrode assembly 20 is reduced, leading to a reduction in the volumetric energy density of the battery cell 100. If H1/H2 is too small, H1 is too small, the thickness of the buffer member 30 is too small, the buffer member 30 is difficult to effectively space the separator 22 apart from adjacent structures, and thus, during swelling of the electrode assembly 20, stress concentration is likely to occur due to the electrode assembly 20 pressing against adjacent structures.

In view of this, H1/H2 is limited to between 50 and 700, and H1/H2 may be any one of 50, 100, 150, 200, 250, 0, 350, 400, 450, 500, 550, 600, 650, or 700, or a range defined by any two of these values.

This can prevent excessive reduction in the volumetric energy density of the battery cell 100 while reducing the probability of stress concentration during swelling of the electrode assembly 20, and prolonging the service life and reliability of the battery cell 100.

As shown in FIGs. 7 to 10, in some embodiments, the buffer member 30 has a buffer cavity 32.

In some embodiments, the buffer member 30 is provided with a buffer cavity 32, the buffer cavity 32 can be located inside the buffer member 30, that is, the buffer cavity 32 is not connected to the external space of the buffer member 30. Thus, by providing the buffer cavity 32, the deformable amount of the buffer member 30 is increased, improving the compression performance of the buffer member 30, thereby achieving effective buffering of the swelling force of the electrode assembly 20.

In other embodiments, the buffer cavity 32 can also form an open cavity with an opening, and the opening of the buffer cavity 32 is located on a surface of the buffer member 30, which can be one side surface of the buffer member 30 having an opening or two opposite sides of the buffer member 30 both having openings.

For one buffer cavity 32, some buffer cavities 32 have one opening, the buffer member 30 can have one buffer cavity 32 or a plurality of buffer cavities 32, the plurality of openings of the plurality of buffer cavities 32 may be located on the same side of the buffer member 30, or the plurality of openings of the plurality of buffer cavities 32 may be located on different sides of the buffer member 30.

For one buffer cavity 32, some buffer cavities 32 have two openings, the two openings may be respectively located on two opposite sides of the buffer member 30, and the two openings may be arranged opposite along the third direction F3; alternatively, the two openings may also offset.

By providing the above buffer cavity 32, an effective area of the buffer member 30 can be reduced, improving the compression rate of the buffer member 30 while ensuring that the buffer member 30 has a certain deformation resistance, so that during cyclic charging and discharging of the battery cell 100, the buffer member 30 can alleviate the swelling force exerted by the electrode assembly 20 through compressive deformation. Since the surface of the buffer member 30 has an opening of the buffer cavity 32, the buffer cavity 32 can accommodate gas generated by the electrode assembly 20, thereby reducing the internal pressure of the battery cell 100.

As shown in FIGs. 7 to 9, in some embodiments, the buffer member 30 has a pressure-bearing surface 31 facing or facing away from the separator 22, and a portion of the pressure-bearing surface 31 is recessed to form the buffer cavity 32.

The pressure-bearing surface 31 is the surface of the buffer member 30 that is compressed when the electrode assembly 20 swells, the pressure-bearing surface 31 may be the surface directly facing the separator 22 to support and bear pressure, or the surface facing away from the separator 22 to indirectly bear pressure. For example, when the buffer member 30 is provided outside the electrode assembly 20, the surface of the buffer member 30 facing the housing 10 and facing away from the electrode assembly 20 having the separator 22, and the surface of the buffer member 30 facing the electrode assembly 20 having the separator 22 are both pressure-bearing surfaces 31; alternatively, when the buffer member 30 is provided inside the electrode assembly 20 and between the electrode plate 21 and the separator 22, the surface of the buffer member 30 facing the electrode plate 21 and facing away from the separator 22, and the surface of the buffer member 30 facing the separator 22 are both pressure-bearing surfaces 31.

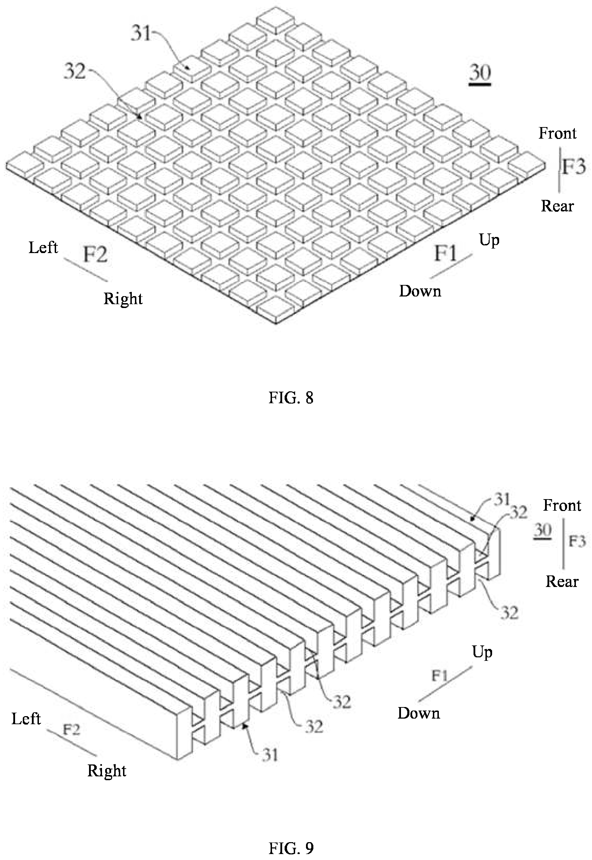

As shown in FIGs. 7 and 8, one pressure-bearing surface 31 of the buffer member 30 has a buffer cavity 32, the buffer member 30 can be in contact with the separator 22 or the electrode plate 21, or the housing 10 through the pressure-bearing surface 31. As shown in FIG. 9, two pressure-bearing surfaces 31 of the buffer member 30 have buffer cavities 32, that is, two opposite sides of the buffer member 30 have buffer cavities 32. When the buffer member 30 is provided outside the electrode assembly 20, each side of the buffer member 30 can be in contact with one of the electrode assembly 20 and the housing 10 through the pressure-bearing surface 31, and the other side can also be in contact with the other of the electrode assembly 20 or the housing 10 through the pressure-bearing surface 31. Thus, on the basis of achieving positioning and fixing of the buffer member 30, the buffer member 30 can support the electrode assembly 20, and at the position of the buffer cavity 32, the buffer member 30 has no contact with the electrode assembly 20 and the housing 10, thereby further reducing the effective area of the buffer member 30 and improving the compressibility of the buffer member 30 while ensuring that the buffer member 30 has a certain deformation resistance.

When the buffer member 30 is provided inside the electrode assembly 20, each side of the buffer member 30 can be in contact with one of the electrode plate 21 and the separator 22 through the pressure-bearing surface 31, and the other side can also be in contact with the other of the electrode plate 21 or the separator 22 through the pressure-bearing surface 31. Thus, on the basis of achieving positioning and fixing of the buffer member 30, the buffer member 30 can support the electrode plate 21, and at the position of the buffer cavity 32, the buffer member 30 has no contact with the electrode plate 21 and the separator 22, thereby further reducing the effective area of the buffer member 30 and improving the compressibility of the buffer member 30 while ensuring that the buffer member 30 has a certain deformation resistance.

As shown in FIGs. 7 and 9, in some embodiments, the buffer member 30 is a buffer block, where the buffer block is a block structure, the buffer block can form a square sheet, a circular sheet, or a triangular sheet, a portion of an outer surface of the buffer block being recessed inward to form a groove, and the groove is formed as the buffer cavity 32. The portion of the buffer block not forming the groove can be in contact with the electrode assembly 20 or the housing 10, and the bottom of the groove is spaced apart from the electrode assembly 20 or the housing 10, that is, the buffer cavity 32 is formed by grooving. By designing the buffer member 30 as an integral structural member and forming the buffer cavity 32 by grooving, manufacturing is convenient, while reducing assembly steps of the buffer member 30, reducing assembly workload, and lowering manufacturing costs.

As shown in FIG. 7, an outer surface of a side of the buffer member 30 has an inward recessed groove. As shown in FIG. 9, outer surfaces of two opposite sides of the buffer member 30 respectively have inward recessed grooves, the plurality of grooves can be spaced apart along the length direction of the buffer member 30 (the second direction F2 as shown in FIG. 9), each groove can extend along a width direction of the buffer member 30 (the first direction F1 as shown in FIG. 9), making the grooves evenly distributed on the buffer block. The plurality of grooves can be spaced apart along the width direction of the buffer block, each groove can extend along the length direction of the buffer block, making the grooves evenly distributed on the buffer block. Certainly, as shown in FIG. 8, the grooves can also be arranged in multiple rows and columns, thereby making the distribution of the grooves more uniform, further making the support of the buffer member 30 to the electrode assembly 20 more uniform, and compressive deformation more uniform, thereby effectively alleviating the swelling force of the battery cell 100.

As shown in FIG. 8, in other embodiments, the buffer member 30 includes a support plate and a plurality of buffer blocks. The buffer blocks are provided on the support plate, the plurality of buffer blocks are spaced apart, and the gap between adjacent two buffer blocks is formed as the buffer cavity 32. By setting the buffer member 30 to include a plurality of buffer blocks, the overall buffer member 30 is formed by splicing and combining the plurality of buffer blocks with the support plate, each buffer block having a simple structure and simple manufacturing process, facilitating manufacturing and forming.

As shown in FIG. 10, in some embodiments, the buffer member 30 includes a first pressure-bearing surface 311 and a second pressure-bearing surface 312 disposed opposite each other, and the buffer cavity 32 run through the first pressure-bearing surface 311 and the second pressure-bearing surface 312.

As shown in FIG. 10, the buffer cavity 32 runs through the first pressure-bearing surface 311 and the second pressure-bearing surface 312, that is, end openings of the buffer cavity 32 are respectively formed on the first pressure-bearing surface 311 and the second pressure-bearing surface 312. From the first pressure-bearing surface 311 to the second pressure-bearing surface 312, an extension path of the buffer cavity 32 is not limited. For example, the buffer cavity 32 can extend straight along the third direction F3 as shown in FIG. 10, or the buffer cavity 32 can extend along a folded line, curve, or the like. The shape of the end openings includes but is not limited to the circular, rectangular, trapezoidal, triangular, or other shapes shown in FIG. 10.

By allowing the buffer cavity 32 to run through the two pressure-bearing surfaces 31 of the buffer member 30, the area of the buffer member 30 can be effectively reduced, improving the compression rate of the buffer member 30. During charging and discharging of the electrode assembly 20, the buffer member 30 can be effectively compressed to alleviate the swelling force exerted by the electrode assembly 20, and the external dimensions of the buffer member 30 can be increased to a certain extent, so that the buffer member 30 provides better overall support for the electrode assembly 20, reducing deformation of the electrode plate 21, thereby improving wrinkling of the electrode plate 21 caused by swelling of the electrode assembly 20 and alleviating lithium or sodium precipitation issues during cycling of the electrode assembly 20. The buffer cavity 32 can also accommodate gas generated by the electrode assembly 20, thereby reducing the internal pressure of the battery cell 100, effectively improving the cycling performance of the battery cell 100, which is further conducive to prolonging the service life of the battery cell 100.

As shown in FIG. 4, in some embodiments, the electrode assembly 20 includes a flat region 201 and a bending region 202 connected to an end of the flat region 201, and the buffer member 30 is arranged opposite to at least one of the flat region 201 and the bending region 202.

As shown in FIG. 4, after the electrode plate 21 and the separator 22 are stacked and wound, a flat region 201 is formed, where the flat region 201 refers to the portion extending along a plane after winding, and the bending region 202 refers to the portion extending along an arc surface after winding. For example, as shown in FIG. 4, the portion between the front side surface and the rear side surface of the electrode assembly 20 is formed as the flat region 201, the extension direction of the electrode plate 21 in the flat region 201 is the length direction of the flat region 201, and for the second direction F2 as shown in FIG. 4, the left and right ends of the flat region 201 are the bending regions 202.

Arranging the buffer member 30 opposite the flat region 201 enables the buffer member 30 to buffer the region of the electrode assembly 20 corresponding to the flat region 201; and arranging the buffer member 30 opposite a bending portion makes the region of the buffer member 30 facing the bending portion generally arc-shaped, so that the buffer member 30 can buffer the swelling force of the bending portion, mitigating the risk of bridge breakage and lithium precipitation in the electrode assembly 20.

As shown in FIG. 4, in some embodiments, along a stacking direction of the buffer member 30 and the electrode assembly 20, the area of the buffer member 30 projected onto the housing 10 is S1, the electrode assembly 20 includes a flat region 201 and a bending region 202 connected to an end of the flat region 201, and an area of the positive electrode active substance region of the flat region 201 projected onto the housing 10 is S3, where 0.3 ≤ S1/S3 ≤ 1.1, preferably 0.75 ≤ S1/S3 ≤ 0.85.

As shown in FIG. 4, the buffer member 30 is projected onto the housing 10 along the third direction F3, the dimension of the buffer member 30 in the second direction F2 is B1, the dimension of the buffer member 30 in the first direction F1 is C1, the area of the buffer member 30 projected onto the housing 10 is S1, where S1 = B1*C1.

During use of the battery cell 100, the thickness of the electrode assembly 20 changes to a certain extent. This action on the housing 10 results in its deformation, and in particular, leading to larger deformation in the portion of the housing 10 corresponding to the positive electrode active substance region. As shown in FIG. 4, the length dimension of the positive electrode active substance region of the flat region 201 in the second direction F2 is B3, B3 being the distance between the corners on two sides of the innermost winding turn, the height dimension of the positive electrode active substance layer within the flat region 201 in the first direction F1 is C3, and an area of the positive electrode active substance region of the flat region 201 projected onto the housing 10 is S3, where S3 = B3*C3.

If S1/S3 is too small, the portion of the flat region 201 covered by the buffer member 30 is too small, and during swelling of the electrode assembly 20, the electrode assembly 20 is still likely to press against adjacent structures, causing stress concentration. If S1/S3 is too large, the dimension of the buffer member 30 is too large, installation of the buffer member 30 in the battery cell 100 is inconvenient, and the buffer member 30 occupying too much space easily affects the venting space inside the battery cell 100.

In view of this, S1/S3 is limited to between 0.3 and 1.1, and S1/S3 may be any one of 0.3, 0.4, 0.5, 0.6, 0.7, 0.8, 0.9, 1, or 1.1, or a range defined by any two of these values.

Thus, the arrangement of the buffer member 30 can reduce the probability of stress concentration during swelling of the electrode assembly 20, while facilitating installation of the buffer member 30 without occupying excessive space, improving the reliability of the battery cell 100.

In some embodiments, 0.75 ≤ S1/S3 ≤ 0.85, and S1/S3 may be any one of 0.75, 0.76, 0.77, 0.78, 0.79, 0.8, 0.81, 0.82, 0.83, 0.84, or 0.85, or a range defined by any two of these values.

This can further reduce the probability of stress concentration during swelling of the electrode assembly 20, while facilitating installation of the buffer member 30 without occupying excessive space, improving the reliability of the battery cell 100.

As shown in FIGs. 5 and 6, in some embodiments, the electrode assembly 20 includes a plurality of electrode plates 21 arranged in a stacked manner, where along a stacking direction of the plurality of electrode plates 21, the area of the buffer member 30 projected onto the housing 10 is S1, and an area of the positive electrode active substance region of the electrode assembly 20 projected onto the housing 10 is S4, where 0.3 ≤ S1/S4 ≤ 1.1, preferably 0.75 ≤ S1/S4 ≤ 0.85.

As shown in FIGs. 5 and 6, the plurality of electrode plates 21 are arranged along the third direction F3, the buffer member 30 is projected onto the housing 10 along the third direction F3, the dimension of the buffer member 30 in the second direction F2 is B1, the dimension of the buffer member 30 in the first direction F1 is C1, and the area of the buffer member 30 projected onto the housing 10 is S1, where S1 = B1*C1.

During use of the battery cell 100, the thickness of the electrode assembly 20 changes to a certain extent. This action on the housing 10 results in its deformation, and in particular, leading to larger deformation in the portion of the housing 10 corresponding to the positive electrode active substance region. As shown in FIGs. 5 and 6, the length dimension of the positive electrode active substance region of the electrode assembly 20 in the second direction F2 is B4, the height dimension of the positive electrode active substance layer of the electrode assembly 20 in the first direction F1 is C4, and the area of the positive electrode active substance region of the electrode assembly 20 projected onto the housing 10 is S4, where S4 = B4*C4.

If S1/S4 is too small, the portion of the positive electrode active substance region covered by the buffer member 30 is too small, and during swelling of the electrode assembly 20, the electrode assembly 20 is still likely to press against adjacent structures, causing stress concentration. If S1/S4 is too large, the dimension of the buffer member 30 is too large, installation of the buffer member 30 in the battery cell 100 is inconvenient, and the buffer member 30 occupying too much space easily affects the venting space inside the battery cell 100.

In view of this, S1/S4 is limited to between 0.3 and 1.1, and S1/S4 may be any one of 0.3, 0.4, 0.5, 0.6, 0.7, 0.8, 0.9, 1, or 1.1, or a range defined by any two of these values.

Thus, the arrangement of the buffer member 30 can reduce the probability of stress concentration during swelling of the electrode assembly 20, while facilitating installation of the buffer member 30 without occupying excessive space, improving the reliability of the battery cell 100.

In some embodiments, 0.75 ≤ S1/S4 ≤ 0.85, and S1/S4 may be any one of 0.75, 0.76, 0.77, 0.78, 0.79, 0.8, 0.81, 0.82, 0.83, 0.84, or 0.85, or a range defined by any two of these values.

This can further reduce the probability of stress concentration during swelling of the electrode assembly 20, while facilitating installation of the buffer member 30 without occupying excessive space, improving the reliability of the battery cell 100.

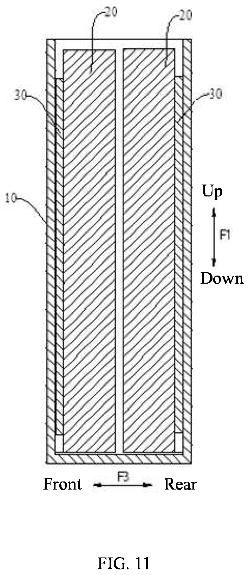

FIGs. 11 to 13 show cross-sectional views of battery cells according to some embodiments of the present application. As shown in FIG. 11, in some embodiments, the buffer member is provided between the housing 10 and the electrode assembly 20.

As shown in FIG. 11, the position of the buffer member 30 can be between the electrode assembly 20 and the housing 10, and the buffer member 30 can both support and buffer the electrode assembly 20 and space the electrode assembly 20 apart from the housing 10, making it less likely for the swelled electrode assembly 20 to press against the housing 10.

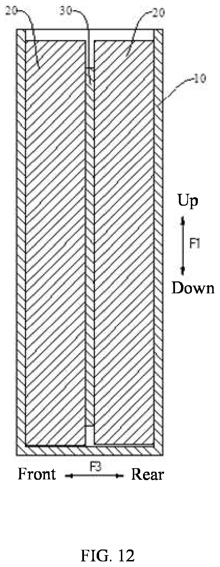

As shown in FIG. 12, in some embodiments, the battery cell 100 includes a plurality of electrode assemblies 20, and the buffer member is provided between two adjacent electrode assemblies 20.

As shown in FIG. 12, the position of the buffer member 30 can be between two adjacent electrode assemblies 20, a plurality of electrode assemblies 20 are arranged along the third direction F3, and the buffer member 30 is provided between two adjacent electrode assemblies 20. The buffer member 30 can both support and buffer the electrode assemblies 20 and space apart the adjacent electrode assemblies 20, making the electrode assemblies 20 less likely to press against each other after swelling.

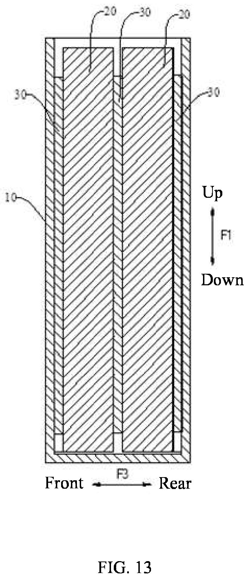

As shown in FIG. 13, the buffer member 30 can also have a portion provided between the electrode assembly 20 and the shell, and a portion provided between adjacent electrode assemblies 20, which is also within the protection scope of the present application. It should be noted that the buffer member 30 provided between the electrode assembly 20 and the shell and the buffer member 30 provided between adjacent electrode assemblies 20 can be different portions of the same buffer member 30 or independent different buffer members 30.

As shown in FIG. 6, in some embodiments, the buffer member 30 is provided between the electrode plate 21 and the separator 22.

As shown in FIG. 6, the buffer member 30 is provided between the electrode plate 21 and the separator 22. For example, the buffer member 30 may be provided between any adjacent electrode plate 21 and separator 22, or the buffer members 30 may be provided between some of the adjacent electrode plates 21 and separators 22, so that one or more buffer members 30 may be provided.

In the above technical solution, by providing the buffer member 30 between the electrode plate 21 and the separator 22, the buffer member 30 can effectively absorb swelling of the electrode plate 21, thereby reducing stress during swelling of the electrode assembly 20.

The electrode plate 21 includes a positive electrode plate 21 and a negative electrode plate 21. Since the deformation amount of the negative electrode plate 21 is relatively larger, the buffer member 30 is provided between the separator 22 and the negative electrode plate 21, swelling of the negative electrode plate 21 can be effectively absorbed, and stress experienced during swelling of the electrode assembly 20 is reduced.

In some embodiments, the buffer member 30 is a porous material member.

A porous material can be made by a foaming process. By using such a porous foamed material member, the compressibility of the buffer member 30 can be improved while reducing manufacturing costs.

In some embodiments, the material of the buffer member 30 includes at least one of polyvinyl chloride, ethylene-vinyl acetate, polyethylene, polypropylene, polyurethane, polymethacrylimide, polyimide, polystyrene, and modified silicone rubber.

By controlling the type of main material of the buffer member 30, the material has good resistance to electrolyte corrosion, compressibility, and resilience, ensuring its reliability throughout the full life cycle of the battery cell 100.

According to the battery 1000 of the embodiment of the second aspect of the present application, the battery cell 100 of the embodiment of the first aspect of the present application is included.

According to the electric apparatus 2000 of the embodiment of the third aspect of the present application, the battery 1000 of the embodiment of the second aspect of the present application is included, the battery 1000 being configured to provide electrical energy for the electric apparatus 2000. Thus, by using the above battery 1000, it is conducive to improving the safety and reliability of the electric apparatus 2000.

Optionally, as shown in FIG. 1, when the battery 1000 is used in a vehicle, the battery 1000 may be disposed at the bottom, front, or rear of the vehicle. The battery 1000 may be configured to supply power to the vehicle. For example, the battery 1000 may be used as an operational power source for the vehicle. The vehicle may further include a controller and a motor, where the controller is configured to control the battery 1000 to supply power to the motor, for example, to satisfy power needs of start, navigation, and driving of the vehicle.

The following describes a battery 1000 and a vehicle having the same according to a specific embodiment of the present application with reference to FIGs. 1 to 3, 5, 7, and 11.

As shown in FIG. 1, the battery 1000 is disposed at the bottom of the vehicle. As shown in FIG. 2, the battery 1000 includes a plurality of battery cells 100. As shown in FIGs. 3 and 11, the battery cell 100 includes a housing 10, two electrode assemblies 20, and a buffer member 30, the electrode assemblies 20 and the buffer member 30 being provided in the housing 10.

As shown in FIG. 5, the electrode assembly 20 includes an electrode plate 21 and a separator 22, where the electrode plate 21 and the separator 22 are stacked to form the electrode assembly 20, the buffer member 30 is located outside the electrode assembly 20, and the buffer member 30 is provided between the housing 10 and the electrode assembly 20.

As shown in FIG. 7, the buffer member 30 has a pressure-bearing surface 31, and the pressure-bearing surface 31 may be the surface of the buffer member 30 facing the housing 10 and facing away from the electrode assembly 20, or may be the surface of the buffer member 30 facing the electrode assembly 20, and a portion of the pressure-bearing surface 31 is recessed to form a buffer cavity 32.

A ratio of the compression rate of the buffer member 30 to that of the separator 22 at 1 MPa is L1/L2, where 1 ≤ L1/L2 ≤ 5. The compression rate of the buffer member 30 at 1 MPa is L1 > 50%.

Along the stacking direction of the buffer member 30 and the separator 22, the area of the buffer member 30 projected onto the housing 10 is S1, an area of the separator 30 projected onto the housing 10 is S2, where 0.05 ≤ S1/S2 ≤ 0.95. The area of the positive electrode active substance region of the electrode assembly 20 projected onto the housing 10 is S4, where 0.3 ≤ S1/S4 ≤ 1.1.

The buffer member 30 and the separator 22 are made of the same material, a ratio of porosity of the buffer member 30 to porosity of the separator 22 being ρ1/ρ2, where 1.05 ≤ ρ1/ρ2 ≤ 4.

The thickness ratio of the buffer member 30 to the separator 22 is H1/H2, where 50 ≤ H1/H2 ≤ 700.

Thus, during charging and discharging of the battery cell 100, the buffer member 30 can be compressed and deformed with the swelling of the electrode assembly 20 to buffer the force exerted by the swelling of the electrode assembly 20 on adjacent structures, alleviating the problem of damage resulting from stress concentration caused by internal compression within the battery cell 100, and prolonging the service life of the battery cell 100. In addition, the compression of the buffer member 30 can provide a certain space for the swelling of the electrode assembly 20, thereby reducing the internal pressure of the battery cell 100 during charging and discharging and improving the reliability of the battery cell 100.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, **characterized by** comprising:
a housing;
an electrode assembly, provided in the housing, the electrode assembly comprising an electrode plate and a separator, the electrode plate and the separator being stacked and/or wound to form the electrode assembly; and
a buffer member, provided in the housing, the buffer member being provided on at least part of a surface of the electrode assembly and/or inside the electrode assembly,
wherein under the same pressure, a compression rate of the buffer member is greater than a compression rate of the separator.

2. The battery cell according to claim 1, **characterized in that** a ratio of the compression rate of the buffer member to that of the separator at 1 MPa is L1/L2, wherein 1 ≤ L1/L2 ≤ 5, preferably 2 ≤ L1/L2 ≤ 3.5.

3. The battery cell according to any one of claims 1 to 2, **characterized in that** the compression rate of the buffer member at 1 MPa is L1, wherein L1 > 50%, preferably L1 > 60%.

4. The battery cell according to any one of claims 1 to 3, **characterized in that** along a stacking direction of the buffer member and the separator, an area of the buffer member projected onto the housing is S1, and an area of the separator projected onto the housing is S2, S1 and S2 satisfying 0.05 ≤ S1/S2 ≤ 0.95, preferably 0.6 ≤ S1/S2 ≤ 0.9.

5. The battery cell according to any one of claims 1 to 4, **characterized in that** the buffer member and the separator are made of the same material, a ratio of porosity of the buffer member to porosity of the separator being ρ1/ρ2, wherein 1.05 ≤ ρ1/ρ2 ≤ 4, preferably 2 ≤ ρ1/ρ2 ≤ 3.5.

6. The battery cell according to any one of claims 1 to 5, **characterized in that** a thickness ratio of the buffer member to the separator is H1/H2, wherein 50 ≤ H1/H2 ≤ 700.

7. The battery cell according to any one of claims 1 to 6, **characterized in that** the buffer member has a buffer cavity.

8. The battery cell according to claim 7, **characterized in that** the buffer member has a pressure-bearing surface facing or facing away from the separator, and a portion of the pressure-bearing surface is recessed to form the buffer cavity.

9. The battery cell according to claim 7, **characterized in that** the buffer member comprises a first pressure-bearing surface and a second pressure-bearing surface disposed opposite each other, and the buffer cavity runs through the first pressure-bearing surface and the second pressure-bearing surface.

10. The battery cell according to any one of claims 1 to 9, **characterized in that** the electrode assembly comprises a flat region and a bending region connected to an end of the flat region, and the buffer member is arranged opposite to at least one of the flat region and the bending region.

11. The battery cell according to claim 10, **characterized in that** along a stacking direction of the buffer member and the electrode assembly, the area of the buffer member projected onto the housing is S1, the electrode assembly comprises a flat region and a bending region connected to an end of the flat region, and an area of a positive electrode active substance region of the flat region projected onto the housing is S3, wherein 0.3 ≤ S1/S3 ≤ 1.1, preferably 0.75 ≤ S1/S3 ≤ 0.85.

12. The battery cell according to any one of claims 1 to 9, **characterized in that** the electrode assembly comprises a plurality of electrode plates arranged in a stacked manner,
wherein along a stacking direction of the plurality of electrode plates, the area of the buffer member projected onto the housing is S1, and an area of the positive electrode active substance region of the electrode assembly projected onto the housing is S4, wherein 0.3 ≤ S1/S4 ≤ 1.1, preferably 0.75 ≤ S1/S4 ≤ 0.85.

13. The battery cell according to any one of claims 1 to 12, **characterized in that** the buffer member is provided between the housing and the electrode assembly.

14. The battery cell according to any one of claims 1 to 13, **characterized in that** the battery cell comprises a plurality of electrode assemblies, and the buffer member is provided between two adjacent electrode assemblies.

15. The battery cell according to any one of claims 1 to 14, **characterized in that** the buffer member is provided between the electrode plate and the separator.

16. The battery cell according to any one of claims 1 to 15, **characterized in that** the buffer member is a porous material member.

17. The battery cell according to any one of claims 1 to 16, **characterized in that** the material of the buffer member comprises at least one of polyvinyl chloride, ethylene-vinyl acetate, polyethylene, polypropylene, polyurethane, polymethacrylimide, polyimide, polystyrene, and modified silicone rubber.

18. A battery, **characterized by** comprising the battery cell according to any one of claims 1 to 17.

19. An electric apparatus, **characterized in that** it comprises the battery according to claim 18, the battery being used to provide electrical energy.
